# EUROPEAN PATENT APPLICATION

(11) **EP 4 167 336 A1**
(43) Date of publication of application: **19.04.2023**
(21) Application number: 21824771.6
(22) Date of filing: 11.06.2021
(51) Int. Cl.: H01M 10/0562, H01M 10/0585, H01M 50/10, H01M 50/172, H01M 50/183, H01M 50/531

(54) **SOLID-STATE BATTERY AND METHOD FOR PRODUCING SOLID-STATE BATTERY**

(30) Priority: 15.06.2020 JP 2020103335
(71) Applicant: Murata Manufacturing Co., Ltd., Nagaokakyo-shi, Kyoto 617-8555 (JP)
(72) Inventor: MORI, Haruhiko, Nagaokakyo-shi, Kyoto 617-8555 (JP); TAMAKI, Isao, Nagaokakyo-shi, Kyoto 617-8555 (JP); IMURA, Hideki, Nagaokakyo-shi, Kyoto 617-8555 (JP); FUJIMOTO, Norihide, Nagaokakyo-shi, Kyoto 617-8555 (JP)
(74) Representative: Reeve, Nicholas Edward
(86) International application number: PCT/JP2021/022373
(87) International publication number: WO 2021/256403

(57) **Abstract**

A solid state battery is provided including a battery element that includes a positive electrode layer, a negative electrode layer, and a solid electrolyte layer interposed between the positive electrode layer and the negative electrode layer. A solid state battery of the present invention includes a composite protective layer covering the battery element, and a conducting part capable of extracting electricity from the battery element to an outside, in which the composite protective layer includes a first protective layer and a second protective layer formed with an overlapping region where the first protective layer and the second protective layer overlap each other, and the conducting part is extended from the overlapping region to the outside.

## Description

### TECHNICAL FIELD

The present invention relates to a solid state battery and a method of manufacturing the same.

### BACKGROUND ART

Conventionally, secondary batteries that can be repeatedly charged and discharged have been used for various purposes. For example, the secondary battery is used as a power supply of an electronic device such as a smartphone or a notebook computer.

In the secondary battery, a liquid electrolyte (electrolytic solution) such as an organic solvent has been conventionally used as a medium for moving ions. However, the secondary battery using the electrolytic solution has a problem such as leakage of the electrolytic solution. Therefore, a solid state battery including a solid electrolyte instead of a liquid electrolyte has been developed.

### PRIOR ART DOCUMENT

### PATENT DOCUMENTS

Patent Document 1: Japanese Patent Application Laid-Open No. 2017-117696
Patent Document 2: Japanese Patent Application Laid-Open No. 2016-58142
Patent Document 3: Japanese Patent Application Laid-Open No. 2015-220099

### SUMMARY OF THE INVENTION

### Problem to be solved by the invention

In such a solid state battery, from the viewpoint of avoiding deterioration of battery characteristics, it is required to take measures for preventing water vapor in the air from entering the inside.

The present invention has been made in view of such circumstances. That is, a main object of the present invention is to provide a solid state battery capable of suitably suppressing entry of water vapor into the inside, and a method of manufacturing the solid state battery.

### Means for solving the problem

That is, in an embodiment of the present invention, provided is a solid state battery including:
a battery element including a positive electrode layer, a negative electrode layer, and a solid electrolyte layer interposed between the positive electrode layer and the negative electrode layer;
a composite protective layer covering the battery element; and
a conducting part capable of extracting electricity from the battery element to an outside,
in which the composite protective layer includes a first protective layer and a second protective layer formed with an overlapping region where the first protective layer and the second protective layer overlap each other, and
the conducting part is extended from the overlapping region to the outside.

Furthermore, in an embodiment of the present invention, provided is a method of manufacturing a solid state battery, the method including:
preparing a battery element including a positive electrode layer, a negative electrode layer, and a solid electrolyte layer interposed between the positive electrode layer and the negative electrode layer;
providing a first protective layer to cover a part of the battery element;
providing a conducting part capable of extracting electricity from the battery element to an outside; and
providing a second protective layer to cover a remaining part other than the part of the battery element,
in which the second protective layer is provided so that an overlapping region is formed in which the first protective layer and the second protective layer overlap each other, and the conducting part is extended from the overlapping region to the outside.

### Advantageous effect of the invention

According to an embodiment of the present invention, entry of water vapor into the inside can be suitably suppressed.

### BRIEF EXPLANATION OF DRAWINGS

FIG. 1 is a sectional view schematically illustrating a solid state battery according to an embodiment of the present invention.
FIG. 2 is a sectional view schematically illustrating an aspect of preventing entry of water vapor by the solid state battery according to an embodiment of the present invention.
FIG. 3 is a sectional view schematically illustrating the solid state battery according to an embodiment of the present invention.
FIG. 4 is a perspective view schematically illustrating the solid state battery according to an embodiment of the present invention.
FIG. 5 is a sectional view schematically illustrating the solid state battery (expanded state) according to an embodiment of the present invention.
FIG. 6 is a sectional view schematically illustrating the solid state battery according to an embodiment (with a sealant) of the present invention.
FIG. 7 is a sectional view schematically illustrating a solid state battery according to another embodiment of the present invention.
FIG. 8 is a sectional view schematically illustrating the solid state battery according to another embodiment of the present invention.
FIG. 9 is a schematic diagram illustrating steps of manufacturing the solid state battery according to an embodiment of the present invention.
FIG. 10 is a sectional view schematically illustrating a conventional solid state battery.
FIG. 11 is a perspective view schematically illustrating a conventional solid state battery.

### MODE FOR CARRYING OUT THE INVENTION

Hereinafter, the "solid state battery" of the present invention will be described in detail. Although the description will be made with reference to the drawings as necessary, the illustrated contents are only schematically and exemplarily illustrated for the understanding of the present invention, and the appearance, the dimensional ratio, and the like may be different from the actual ones.

The "solid state battery" referred to in the present invention refers to a battery whose constituent elements are composed of a solid in a broad sense, and refers to an all-solid state battery whose battery constituent elements (particularly preferably all battery constituent elements) are composed of a solid in a narrow sense. In a preferred aspect, the solid state battery in the present invention is a laminated solid state battery configured such that layers constituting a battery constituent unit are laminated with each other, and preferably, such layers may be composed of a sintered body. Note that the "solid state battery" includes not only a so-called "secondary battery" capable of repeating charging and discharging but also a "primary battery" capable of only discharging. According to a preferred aspect of the present invention, the "solid state battery" is a secondary battery. The "secondary battery" is not excessively limited by its name, and may include, for example, a power storage device and the like.

The term "sectional view" as used in the present specification refers to a state when viewed from a direction substantially perpendicular to a thickness direction of a battery element constituting the solid state battery. An "up-down direction" and a "left-right direction" used directly or indirectly in the present specification correspond to an up-down direction and a left-right direction in the drawings, respectively. Unless otherwise specified, the same reference symbols or signs indicate the same members or parts or the same semantic contents. In a preferred aspect, it can be understood that a downward direction in a vertical direction (that is, a direction in which gravity acts) corresponds to a "downward direction", and an opposite direction corresponds to an "upward direction".

### [Basic configuration of solid state battery]

The solid state battery includes at least electrode layers of a positive electrode and a negative electrode and a solid electrolyte. Specifically, the solid state battery includes a battery element including a battery constituent unit including a positive electrode layer, a negative electrode layer, and a solid electrolyte interposed therebetween.

In the solid state battery, each layer constituting the solid state battery may be formed by firing, and the positive electrode layer, the negative electrode layer, the solid electrolyte, and the like may form a sintered layer. Preferably, the positive electrode layer, the negative electrode layer, and the solid electrolyte are each fired integrally with each other, and therefore the battery element preferably forms an integrally sintered body.

The positive electrode layer is an electrode layer containing at least a positive electrode active material. The positive electrode layer may further contain a solid electrolyte. For example, the positive electrode layer is composed of a sintered body containing at least positive electrode active material particles and solid electrolyte particles. In a preferred aspect, the positive electrode layer is composed of a sintered body substantially containing only positive electrode active material particles and solid electrolyte particles. On the other hand, the negative electrode layer is an electrode layer containing at least a negative electrode active material. The negative electrode layer may further contain a solid electrolyte. For example, the negative electrode layer is composed of a sintered body containing at least negative electrode active material particles and solid electrolyte particles. In a preferred aspect, the negative electrode layer is composed of a sintered body substantially containing only negative electrode active material particles and solid electrolyte particles.

The positive electrode active material and the negative electrode active material are substances involved in the transfer of electrons in the solid state battery. Ions move (are conducted) between the positive electrode layer and the negative electrode layer via the solid electrolyte, and electrons are transferred, whereby charging and discharging are performed. The positive electrode layer and the negative electrode layer are particularly preferably layers capable of occluding and releasing lithium ions or sodium ions. That is, the solid state battery is preferably an all-solid state secondary battery in which lithium ions or sodium ions move between the positive electrode layer and the negative electrode layer via the solid electrolyte to charge and discharge the battery.

### (Positive electrode active material)

Examples of the positive electrode active material contained in the positive electrode layer include at least one selected from the group consisting of a lithium-containing phosphate compound having a NaSICON-type structure, a lithium-containing phosphate compound having an olivine-type structure, a lithium-containing layered oxide, a lithium-containing oxide having a spinel-type structure, and the like. Examples of the lithium-containing phosphate compound having a NaSICON-type structure include Li₃V₂(PO₄)₃. Examples of the lithium-containing phosphate compound having an olivine-type structure include Li₃Fe₂(PO₄)₃, LiFePO₄, and/or LiMnPO₄. Examples of the lithium-containing layered oxide include LiCoO₂ and LiCo_{1/3}Ni_{1/3}Mn_{1/3}O₂. Examples of the lithium-containing oxide having a spinel-type structure include LiMn₂O₄ and/or LiNi_{0.5}Mn_{1.5}O₄.

Furthermore, examples of the positive electrode active material capable of occluding and releasing sodium ions include at least one selected from the group consisting of a sodium-containing phosphate compound having a NaSICON-type structure, a sodium-containing phosphate compound having an olivine-type structure, a sodium-containing layered oxide, a sodium-containing oxide having a spinel-type structure, and the like.

### (Negative electrode active material)

Examples of the negative electrode active material contained in the negative electrode layer include at least one selected from the group consisting of an oxide containing at least one element selected from the group consisting of Ti, Si, Sn, Cr, Fe, Nb, and Mo, a carbon material such as graphite, a graphite-lithium compound, a lithium alloy, a lithium-containing phosphate compound having a NaSICON-type structure, a lithium-containing phosphate compound having an olivine-type structure, and a lithium-containing oxide having a spinel-type structure. Examples of the lithium alloy include Li-Al. Examples of the lithium-containing phosphate compound having a NaSICON-type structure include Li₃V₂(PO₄)₃ and/or LiTi₂(PO4)₃. Examples of the lithium-containing phosphate compound having an olivine-type structure include Li₃Fe₂(PO₄)₃ and/or LiCuPO₄. Examples of the lithium-containing oxide having a spinel-type structure include Li₄Ti₅O₁₂.

Furthermore, examples of the negative electrode active material capable of occluding and releasing sodium ions include at least one selected from the group consisting of a sodium-containing phosphate compound having a NaSICON-type structure, a sodium-containing phosphate compound having an olivine-type structure, a sodium-containing oxide having a spinel-type structure, and the like. Note that, in the solid state battery of the present invention according to a preferred aspect, the positive electrode layer and the negative electrode layer may be made of the same material.

The positive electrode layer and/or the negative electrode layer may contain a conductive material. Examples of the conductive material contained in the positive electrode layer and the negative electrode layer include at least one kind of metal materials such as silver, palladium, gold, platinum, aluminum, copper, and nickel, and carbon, and the like.

Moreover, the positive electrode layer and/or the negative electrode layer may contain a sintering additive. Examples of the sintering additive include at least one selected from the group consisting of lithium oxide, sodium oxide, potassium oxide, boron oxide, silicon oxide, bismuth oxide, and phosphorus oxide.

Note that, in the solid state battery of the present invention according to a preferred aspect, the positive electrode layer and the negative electrode layer are made of the same material. In the solid state battery of the present invention, the positive electrode layer and the negative electrode layer may be made of the same material (For example, in such a case, the positive electrode active material and the negative electrode active material may be the same kind.).

### (Solid electrolyte)

The solid electrolyte is a material capable of conducting lithium ions. In particular, the solid electrolyte constituting a battery constituent unit in the solid state battery forms a layer capable of conducting lithium ions between the positive electrode layer and the negative electrode layer. Note that the solid electrolyte may be provided at least between the positive electrode layer and the negative electrode layer. That is, the solid electrolyte may also exist around the positive electrode layer and/or the negative electrode layer so as to protrude from between the positive electrode layer and the negative electrode layer. Specific examples of the solid electrolyte include a lithium-containing phosphate compound having a NaSICON-type structure, an oxide having a perovskite structure, an oxide having a garnet-type or garnet-type similar structure, and an oxide glass ceramic-based lithium ion conductor. Examples of the lithium-containing phosphate compound having a NaSICON-type structure include LiₓM_{y}(PO₄)₃ (1 ≤ x ≤ 2, 1 ≤ y ≤ 2, and M is at least one selected from the group consisting of Ti, Ge, Al, Ga, and Zr.). Examples of the lithium-containing phosphate compound having a NaSICON-type structure include Li_{1.2}Al_{0.2}Ti_{1.8}(PO₄)₃. Examples of the oxide having a perovskite structure include La_{0.55}Li_{0.35}TiO₃. Examples of the oxide having a garnet-type or garnet-type similar structure include Li₇La₃Zr₂O₁₂. As the oxide glass ceramic-based lithium ion conductor, for example, a phosphate compound (LATP) containing lithium, aluminum, and titanium as constituent elements, and a phosphate compound (LAGP) containing lithium, aluminum, and germanium as constituent elements can be used.

Furthermore, examples of the solid electrolyte capable of conducting sodium ions include a sodium-containing phosphate compound having a NaSICON-type structure, an oxide having a perovskite structure, and an oxide having a garnet-type or garnet-type similar structure. Examples of the sodium-containing phosphate compound having a NaSICON-type structure include NaₓM_{y}(PO₄)₃ (1 ≤ x ≤ 2, 1 ≤ y ≤ 2, and M is at least one selected from the group consisting of Ti, Ge, Al, Ga, and Zr.).

The solid electrolyte may contain a sintering additive. The sintering additive contained in the solid electrolyte may be selected from, for example, the same materials as the sintering additive that can be contained in the positive electrode layer or the negative electrode layer.

A thickness of the solid electrolyte layer is not particularly limited, and may be, for example, 1 um or more and 15 um or less, particularly 1 um or more and 5 um or less.

### (Positive electrode current collecting layer and negative electrode current collecting layer)

The positive electrode layer and the negative electrode layer may each include a positive electrode current collecting layer and a negative electrode current collecting layer. Each of the positive electrode current collecting layer and the negative electrode current collecting layer may have a form of a foil, but may have a form of a sintered body from the viewpoint of reducing the manufacturing cost of the solid state battery by integral firing and reducing the internal resistance of the solid state battery. As a positive electrode current collector constituting the positive electrode current collecting layer and a negative electrode current collector constituting the negative electrode current collecting layer, it is preferable to use a material having high conductivity, and for example, it is preferable to use silver, palladium, gold, platinum, aluminum, copper, nickel, or the like. In particular, copper is preferable because it hardly reacts with the positive electrode active material, the negative electrode active material, and the solid electrolyte material, and has an effect of reducing the internal resistance of the solid state battery. Note that, when the positive electrode current collecting layer and the negative electrode current collecting layer have the form of a sintered body, the positive electrode current collecting layer and the negative electrode current collecting layer may be formed of a sintered body containing a conductive material and a sintering additive. The conductive material contained in the positive electrode current collecting layer and the negative electrode current collecting layer may be selected from, for example, the same material as the conductive material that can be contained in the positive electrode layer and the negative electrode layer. The sintering additive contained in the positive electrode current collecting layer and the negative electrode current collecting layer may be selected from, for example, the same material as the sintering additive that can be contained in the positive electrode layer or the negative electrode layer. Note that, in the solid state battery, the positive electrode current collecting layer and the negative electrode current collecting layer are not essential, and a solid state battery in which such a positive electrode current collecting layer and a negative electrode current collecting layer are not provided is also conceivable. That is, the solid state battery in the present invention may be a solid state battery without the current collecting layer.

Thicknesses of the positive electrode layer and the negative electrode layer are not particularly limited, but may be, for example, 2 um or more and 50 um or less, particularly 5 um or more and 30 um or less, independently of each other.

The solid state battery, in particular the battery element, is generally provided with terminals (e.g. external electrodes). In particular, an end face electrode is provided on a side face of the battery element. More specifically, a positive-electrode-side end face electrode connected to the positive electrode layer and a negative-electrode-side end face electrode connected to the negative electrode layer are provided. Such end face electrodes preferably contain a material having high conductivity. A specific material of the end face electrodes is not particularly limited, but may be at least one selected from the group consisting of silver, gold, platinum, aluminum, copper, tin, and nickel. Furthermore, a terminal called a tab lead for extracting generated electricity to the outside is provided at an end part of each of the end face electrodes. The material of the tab lead is preferably a material having a high electrical conductivity as with the end face electrode. A specific material of the tab lead is not particularly limited, but may be at least one selected from the group consisting of silver, gold, platinum, aluminum, copper, tin, and nickel.

### (Protective layer)

The protective layer may be generally formed on an outermost side of the solid state battery, and is for electrical, physical, and/or chemical protection. The material constituting the protective layer is preferably excellent in insulation property, durability and/or moisture resistance, and environmentally safe. For example, it is preferable to use glass, ceramics, a thermosetting resin and/or a photocurable resin.

### [Characteristic parts of the present invention]

Hereinafter, characteristic parts of the present invention will be described.

The inventors of the present application have intensively studied a solution for enabling suppression of entry of water vapor into the battery. As a result, the present inventors have devised a solid state battery according to an embodiment of the present invention having the following characteristics.

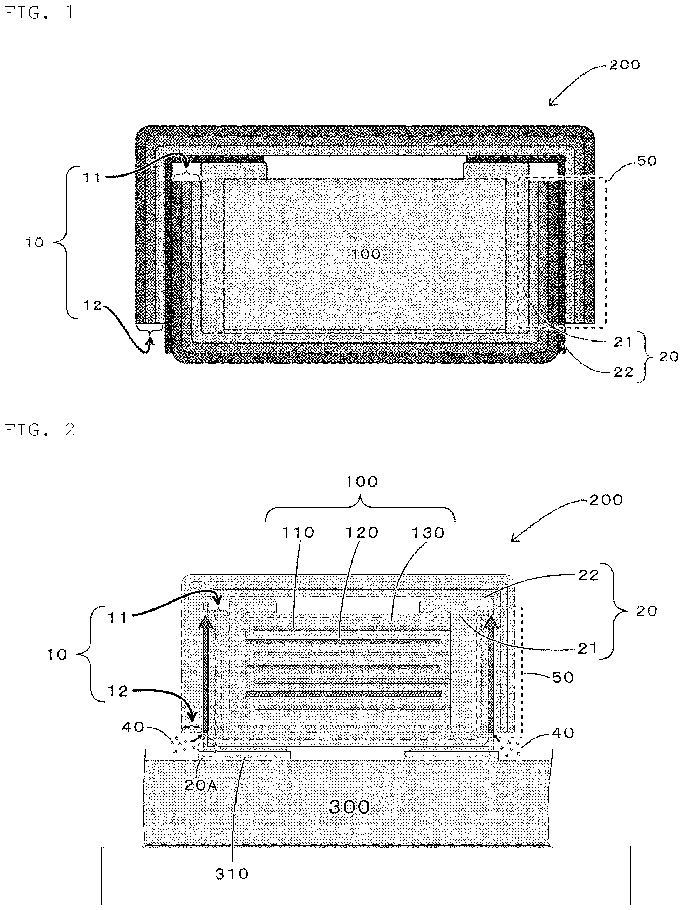

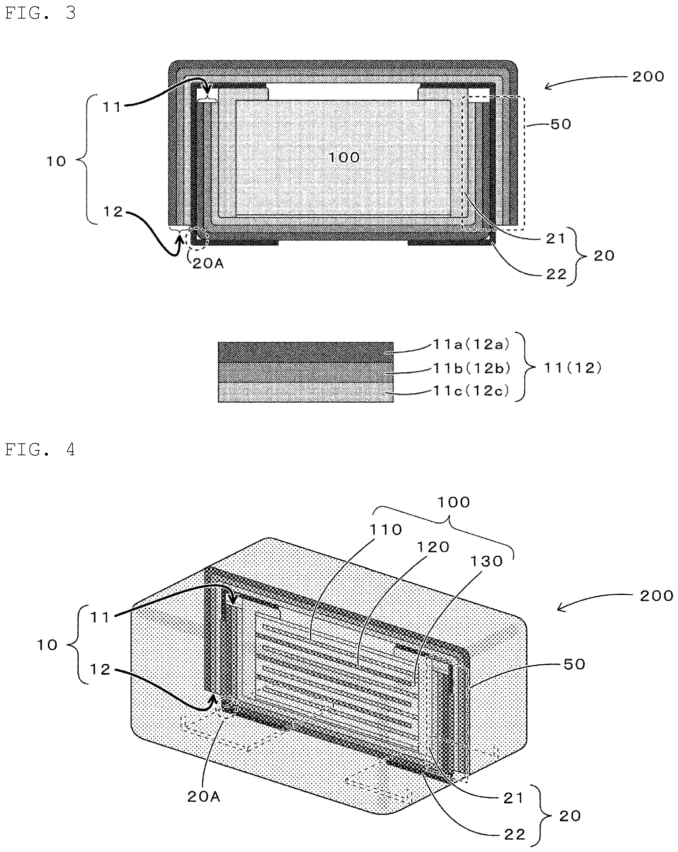

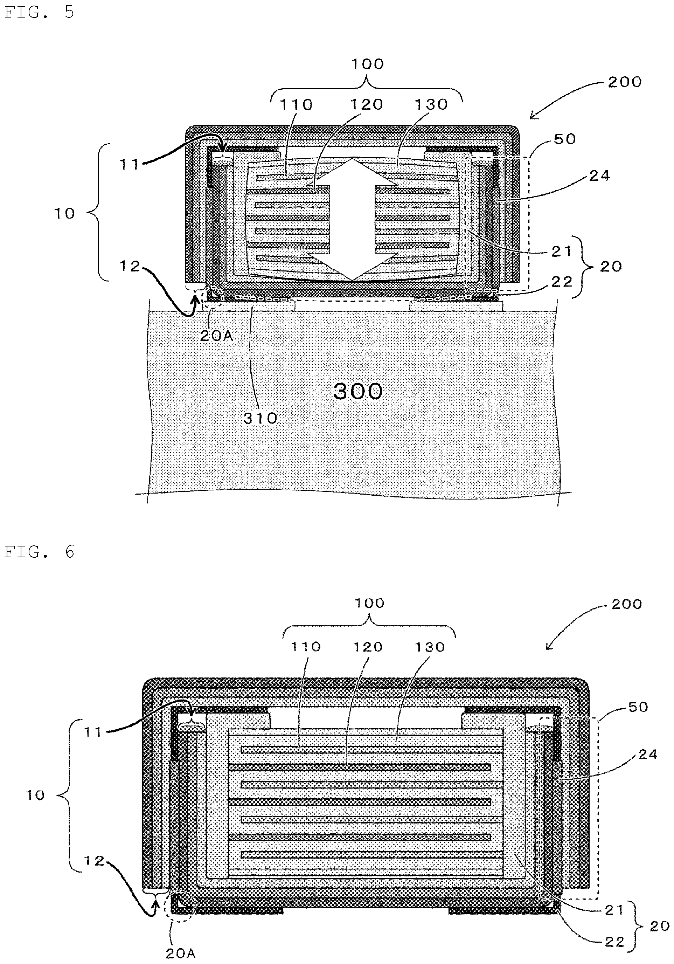

FIG. 1 is a sectional view schematically illustrating a solid state battery according to an embodiment of the present invention. FIG. 2 is a sectional view schematically illustrating an aspect of preventing entry of water vapor by the solid state battery according to an embodiment of the present invention. FIG. 3 is a sectional view schematically illustrating the solid state battery according to an embodiment of the present invention. FIG. 4 is a perspective view schematically illustrating the solid state battery according to an embodiment of the present invention. FIG. 5 is a sectional view schematically illustrating the solid state battery (expanded state) according to an embodiment of the present invention.

The solid state battery according to an embodiment of the present invention is characterized particularly in the protective layer among the constitution elements described in the section of [Basic configuration of solid state battery] above. Specifically, the solid state battery 200 according to an embodiment of the present invention includes a battery element 100, a composite protective layer 10 covering the battery element 100, and a conducting part 20 capable of extracting electricity from the battery element 100 to the outside.

The term "composite protective layer" as used in the present specification refers to a combination of two or more protective layers. The term "conducting part" as used in the present specification refers to a generic term for members that contribute to electrical extraction, such as an end face electrode 21 provided on the battery element 100 and a tab lead 22 connected to the end face electrode 21. That is, the conducting part 20 includes the end face electrode 21 provided on the battery element 100 and the tab lead 22 connected to the end face electrode 21.

That is, in an embodiment of the present invention, the battery element 100 is covered with the composite protective layer 10 formed by combining two or more protective layers. In other words, the composite protective layer 10 surrounds the battery element 100. As an example, as illustrated in FIG. 1, the composite protective layer 10 is composed of first protective layer 11 and second protective layer 12. Moreover, in an embodiment of the present invention, an overlapping region 50 in which the first protective layer 11 and the second protective layer 12 overlap each other is formed in the composite protective layer 10, and the conducting part 20 is extended from the overlapping region 50 to the outside.

Note that, for the overlapping region 50, a positional relationship between the first protective layer 11 and the second protective layer 12 is not particularly limited, and for example, the second protective layer 12 may be positioned outside the first protective layer 11, and the first protective layer 11 may be positioned outside the second protective layer 12. The overlapping region 50 may be composed of more than two protective layers. For example, in the mode illustrated in FIG. 1, the overlapping region 50 is configured by two layers of the first protective layer 11 and the second protective layer 12, but for example, the overlapping region may also be configured using a third protective layer and a fourth protective layer.

The term "overlapping region" used in the present specification refers to a region where the first protective layer 11 and the second protective layer 12 overlap each other in a broad sense, and refers to a region where a part of the first protective layer 11 and a part of the second protective layer 12 overlap each other in a narrow sense. The term "overlapping each other" refers to a state where a principal surface of one protective layer and a principal surface of the other protective layer face each other directly or adjacently. That is, when a resin, a metal, or the like is interposed between the principal surface of one protective layer and the principal surface of the other protective layer, it is regarded as "overlapping each other" in the above state. The term "water vapor" as used in the present specification is not particularly limited to water in a gaseous state, and includes water in a liquid state and the like. That is, the term "water vapor" is used to broadly include matters related to water regardless of the physical state. Therefore, the "water vapor" can also be referred to as moisture or the like, and in particular, as the water in the liquid state, dew condensation water in which water in a gaseous state is condensed can also be included.

The term "extended" as used in the present specification means a state where at least a part of another independent component located in a certain component extends from the certain component to the outside, and at least a part of the other independent component is exposed to the outside. That is, "the conducting part 20 is extended from the overlapping region 50 of the composite protective layer 10 to the outside" as used in the present specification indicates a state where a part of the conducting part 20 electrically connectable to the battery element 100 covered with the composite protective layer 10 is exposed to the outside through between the first protective layer 11 and the second protective layer 12 forming the overlapping region 50 of the composite protective layer 10 as illustrated in FIG. 1.

As illustrated in FIG 1, the first protective layer 11, which is a constitution element of the composite protective layer 10, does not need to cover the whole battery element 100, and similarly, the second protective layer 12 does not need to cover the whole battery element 100. Finally, the first protective layer 11 and the second protective layer 12 may be disposed so as to cover the whole battery element 100 with the first protective layer 11 and the second protective layer 12. That is, the composite protective layer 10 may be finally disposed so as to cover the whole battery element 100. Furthermore, as illustrated in FIG. 1, the overlapping region 50 can be formed such that a part of one protective layer and a part of the other protective layer cover each other. In other words, the overlapping region 50 can be formed by laminating a part of the first protective layer 11 and a part of the second protective layer 12 each other. A direction in which the first and second protective layers are laminated in the overlapping region 50 is a direction substantially perpendicular to a lamination direction of a positive electrode layer 110, a negative electrode layer 120, and a solid electrolyte 130 in the battery element 100. Furthermore, a direction in which the conducting part 20 is extended from the overlapping region 50 to the outside is substantially perpendicular to the direction in which the first and second protective layers are laminated in the overlapping region 50, and on the other hand, is substantially parallel to the lamination direction of the positive electrode layer 110, the negative electrode layer 120, and the solid electrolyte 130 of the battery element 100. By adopting such a configuration, as in the solid state battery 200 of FIG. 1, the first protective layer 11 can be interposed between most of the tab lead 22 constituting the conducting part 20 excluding a connection part with the end face electrode 21 and the battery element 100. In other words, the tab lead 22 can be connected to the end face electrode 21 while the tab lead 22 and the battery element 100 are separated from each other by the first protective layer.

As described above, in the solid state battery 200 according to one embodiment of the present invention, the conducting part 20 is extended from the overlapping region 50 of the composite protective layer 10 to the outside. With such a configuration, the following technical effects can be achieved.

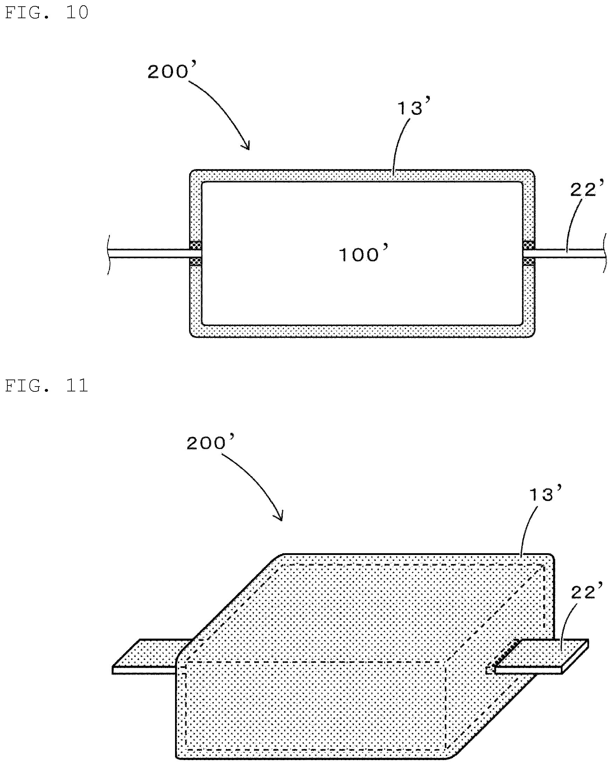

When water vapor enters the battery element, deterioration of battery characteristics may be caused. The entry of water vapor into the battery element can be suppressed by covering a periphery of the battery element with a protective layer as a water vapor transmission preventing layer. In this regard, as illustrated in FIGS. 10 and 11, in a conventional solid state battery 200', a single protective layer 13' is configured to cover a battery element 100' by one circumference in sectional view. In order to extract electricity from the battery element 100' to the outside, a tab lead 22', which is a constitution element of a conducting part, may be connected to the battery element 100' across the protective layer 13'. In other words, the tab lead 22' is configured to protrude outward across the protective layer 13'. In such a configuration, since the tab lead 22' crosses the protective layer 13', a minute gap is generated between the tab lead 22' and the protective layer 13', and the gap may be a passage through which water vapor passes from the outside to the battery element 100'.

In this regard, in the solid state battery 200 according to an embodiment of the present invention, as illustrated in FIGS. 1 and 2, the conducting part 20 connected to the battery element 100 is extended from the overlapping region 50 to the outside. Therefore, as compared with the conventional solid state battery 200' covered with the single protective layer 13' (That is, there is no overlapping region.), in the extending direction (longitudinal direction) of the overlapping region 50 in sectional view, a path length from the outside of the battery to the battery element 100 can be increased by a length of the overlapping region 50. As a result, water vapor 40 can be favorably suppressed from reaching the battery element 100 from the outside as compared with the conventional solid state battery 200'.

Furthermore, as can be seen from the above description, in the overlapping region 50, one protective layer and the other protective layer overlap each other. That is, the overlapping region 50 is a region including two or more protective layers. Therefore, a thickness of the overlapping region 50 is thicker than a thickness of the composite protective layer 10 in other parts other than the overlapping region 50. This makes it possible to increase the thickness of the protective layer in the overlapping region 50 as compared with the conventional solid state battery 200' covered with the single protective layer 13' (That is, there is no overlapping region.) in a thickness direction (transverse direction) of the overlapping region 50 in sectional view. Therefore, as compared with the conventional solid state battery 200', it is possible to favorably suppress the water vapor 40 from reaching the battery element 100 from the outside.

Note that the first protective layer 11 and the second protective layer 12 constituting the composite protective layer 10 described above are preferably laminate films. By using the laminate film, it is possible to reduce the thickness, weight, and space of the solid state battery. A material of the laminate film is not particularly limited as long as it is generally used for a solid state battery. The laminate film is formed by bonding a foil-shaped metal and a sheet-shaped resin. For example, the laminate film includes a metal layer as an intermediate layer, a first resin layer covering one surface of the metal layer, and a second resin covering the other of the metal layer.

The metal constituting the metal layer that is the intermediate layer of the laminate film is not particularly limited as long as it can impart heat resistance, seal strength, and impact resistance. Examples of the metal constituting the metal layer include at least one selected from the group consisting of aluminum, copper, nickel, titanium, stainless steel, and the like. Preferable examples include aluminum and copper from the viewpoint of electrical conductivity. The form of the metal layer is not particularly limited, and may be, for example, a foil-shaped layer, a sheet-shaped layer, or a deposited layer.

The first resin layer covering the metal layer that is the intermediate layer of the laminate film may include a resin capable of imparting an adhesive property. The resin is preferably one that can impart adhesiveness by thermal welding, and specific examples of a resin material constituting the adhesive resin include at least one selected from polypropylene-based resin, polyethylene terephthalate-based resin, nylon-based resin, polyamide-based resin, acrylic-based resin, and the like.

The second resin layer covering the metal layer that is the intermediate layer of the laminate film may include a resin that electrically, physically, and/or chemically protects the battery element. Specifically, a resin material constituting the resin is not particularly limited, and examples thereof include at least one selected from a polyethylene-based resin, a polypropylene-based resin, a polyethylene terephthalate-based resin, a polyamide-based resin, an acryl-based resin, and the like.

When these protective layers easily transmit water vapor (moisture, gas (carbon dioxide), and the like), the water vapor enters the inside of the battery element, and the positive electrode layer, the negative electrode layer, and the solid electrolyte layer suction and absorb the water vapor, which may deteriorate battery performance. In view of the above, a water vapor transmission rate of the protective layer in a thickness direction may be, for example, less than 5.0 × 10⁻³ g/(m² · day), preferably 0 or more and less than 5.0 × 10⁻³ g/(m² · day). Note that the "water vapor transmission rate" mentioned herein refers to a transmission rate obtained by an MA method under measurement conditions of 85°C and 85%RH using a gas transmission rate measuring device of model WG-15S manufactured by MORESCO Corporation.

Alternatively, a value of the water vapor transmission rate obtained under the measurement conditions of 40°C, 90%RH, and a differential pressure of 1 atm using a gas transmission rate measuring device of model GTms-1 manufactured by Advanced Riko Co., Ltd. may be less than 1.0 × 10⁻³ g/(m² · day).

From the viewpoint of preventing water vapor from entering the battery element 100, the overlapping region 50 is preferably wide. Specifically, in sectional view, it is more preferable as a length of the overlapping region along a longitudinal direction of the tab lead 22 is longer. The length of the overlapping region may be 10% or more, preferably 20% or more, 30% or more, and more preferably 40% or more with respect to a height of the battery element 100 (that is, a length from an upper surface to a lower surface of the battery element 100). Furthermore, from the viewpoint of facilitating adjustment of the position and length of the conducting part 20 extended to the outside, the length of the overlapping region may be 100% or less, preferably 90% or less, 80% or less, or 70% or less, and more preferably 60% or less, with respect to the height of the battery element 100.

The solid state battery according to one embodiment of the present invention preferably adopts the following aspect.

In one aspect, the conducting part 20 is preferably provided so as to be sandwiched between the first protective layer 11 and the second protective layer 12 constituting the composite protective layer 10 (see FIGS. 1 to 5 and the like). Specifically, the first protective layer 11 is in contact with the conducting part 20, and the second protective layer 12 is in contact with the conducting part 20. In this state, the conducting part 20 is sandwiched between the first protective layer 11 and the second protective layer 12. In another aspect, as illustrated in FIG. 1, the conducting part 20 may be provided between an outer surface of the first protective layer 11 and an inner surface of the second protective layer 12. In such a configuration, the conducting part 20 is sandwiched between the first protective layer 11 and the second protective layer 12 so as to be substantially parallel to the first protective layer 11 and the second protective layer.

That is, it is preferable that the conducting part 20 is positioned between the first protective layer 11 and the second protective layer 12, and the conducting part 20, the first protective layer 11, and the second protective layer 12 are integrated. By adopting such a configuration, since the protective layers are positioned on both sides of the conducting part 20 in sectional view, the conducting part 20 can be brought into surface contact with each other by the two protective layers, and a minute gap between the conducting part 20 and each protective layer can be suitably reduced. As a result, the water vapor can be suitably suppressed from passing through the overlapping region 50.

Note that, from the viewpoint of suppressing water vapor from passing through the overlapping region 50 on both the positive electrode side and the negative electrode side, it is preferable that two overlapping regions 50 are provided in sectional view. Specifically, it is preferable to provide one that sandwiches the conducting part on the positive electrode side (corresponding to the tab lead 22) and one that sandwiches the conducting part on the negative electrode side (corresponding to the tab lead 22).

In one aspect, the conducting part 20 and the composite protective layer 10 are preferably provided along a contour surface of the battery element 100 (see FIGS. 1 to 8 and the like).

In the present specification, the "contour surface of the battery element 100" means a surface that defines the shape or appearance of the battery element 100. In the present specification, "the conducting part 20 and the composite protective layer 10 are provided along the contour surface of the battery element 100" means a state where the conducting part 20 and the composite protective layer 10 are provided substantially parallel to an extending direction of the contour surface of the battery element 100.

That is, it is preferable that the conducting part 20 and the composite protective layer 10 extend in substantially the same direction as the extending direction of the contour surface of the battery element 100. In the present specification, the "extending direction of the contour surface of the battery element 100" means a direction in which the contour surface advances in the longitudinal direction. The conducting part 20 and the composite protective layer 10 only need to extend at least at a glance in substantially the same direction as the extending direction of the contour surface of the battery element 100, and the conducting part 20 and the composite protective layer 10 do not necessarily need to extend in exactly the same direction as the extending direction of the contour surface of the battery element 100. For example, due to a positional relationship among the conducting part 20, the composite protective layer 10, and the battery element 100, there may be a part where a part of the conducting part 20 and a part of the composite protective layer 10 do not extend substantially in the same direction and parallel to the extending direction of the contour surface of the battery element 100.

In the conventional solid state battery 200', as described above, the tab lead 22', which is a constitution element of the conducting part, is configured to cross the protective layer 13' and protrude toward the outside. Therefore, an area required for mounting in the conventional solid state battery 200' is further required by an area of the tab lead protruding to the outside. Furthermore, since the tab lead is a part that extracts electricity from the solid state battery and does not contribute to power generation of the solid state battery, the tab lead can lead to a decrease in power generation capacity per unit area of the solid state battery according to the area of the protruding conducting part.

In this regard, in an embodiment of the present invention, the conducting part 20 is extended from the overlapping region 50 where the first protective layer 11 and the second protective layer 12 overlap each other. The overlapping region 50 is a constitution element of the composite protective layer 10 that covers the battery element 100, and thus may be generally in the form of a contour of the battery element 100. Therefore, the conducting part 20 extended from the overlapping region 50 can also have a structure in which the protrusion is suppressed along the contour of the battery element 100. Since the conducting part 20 (specifically, the tab lead 22) may have a structure along the contour of the battery element 100 instead of the protruding structure, the solid state battery 200 according to an embodiment of the present invention can be surface-mounted on an electronic substrate as a whole.

In one aspect, it is preferable that an extended part (corresponding to the tab lead 22) of the conducting part 20 to the outside includes a bent part 20A (see FIGS. 2 to 5 and the like). The bent part herein means a bent part. The form of bending is not particularly limited, and for example, as illustrated in FIGS. 2 to 5, the extended part of the conducting part 20 to the outside may be bent so as to have a right angle part. Alternatively, the extended part to the outside of the conducting part 20 may be bent so as to have a part drawing an arc (curved shape), and specifically, may be bent along a surface of the protective layer.

As illustrated in FIG. 2, the extended part (corresponding to the tab lead 22) of the conducting part 20 to the outside is connected to an electronic substrate 300 or the like when the solid state battery 200 according to an embodiment of the present invention is surface-mounted. At that time, the extended part (corresponding to the tab lead 22) of the conducting part 20 to the outside can be formed in a bent form according to a mounting area of the solid state battery 200 according to an embodiment of the present invention, a positional relationship between the solid state battery 200 and the electronic substrate 300, or the like, and a connection method between the solid state battery 200 and the electronic substrate 300, or the like.

The length of the conducting part 20 extended to the outside is not particularly limited as long as electricity can be taken out from the conducting part 20. From the viewpoint of suitable surface mounting of the solid state battery, the extended conducting part 20 is preferably provided such that an end part of the extended conducting part 20 is provided on at least one of the upper surface side and the lower surface side of the battery element 100 covered with the first protective layer 11 or the second protective layer 12. Specifically, it is preferable that the end part of the conducting part 20 (specifically, the tab lead 22) along the contour of the battery element 100 is provided on the upper surface side or the lower surface side of the solid state battery 200, for example, the lower surface side. As a result, the solid state batteries 200 can be mounted on the electronic substrate 300 in the same row, and the overall surface mounting area can be further reduced. Furthermore, from the viewpoint of further reducing the overall surface mounting area and more reliably achieving the surface mounting of the solid state battery 200, it is preferable that at least a part of the extended part of the conducting part 20 is in "surface" contact with a surface of the electronic substrate 300. By making contact with the "surface", a contact area between the conducting part 20 and the electronic substrate 300 can be increased. As illustrated in FIG. 2, such a form can be achieved by providing a bent part in the extended part of the conducting part 20 such that at least a part of the extended part of the conducting part 20 to the outside is substantially parallel to the surface of the electronic substrate 300.

Note that the end part of the extended conducting part 20 is not necessarily fixed to the first protective layer 11 or the second protective layer 12, and may be a free end at which the end part can freely move. In this regard, from the viewpoint of reducing the mounting area, in one aspect, a form in which at least the end part of the extended conducting part 20 is fixed to the first protective layer 11 or the second protective layer 12 is preferable.

By adopting such a form, the end part of the extended conducting part 20 is brought into close contact along the side surface of the battery element 100, and the close contact state can be maintained. Since the part protruding from the solid state battery can be more reliably suppressed, the mounting area can be reduced.

Moreover, since the close contact state is maintained, it is possible to suitably prevent the end part of the extended conducting part 20 from being bent and deformed when a force is applied from the outside to the end part of the extended conducting part 20. As a result, the solid state battery 200 can be appropriately surface-mounted on the electronic substrate 300.

A method of fixing the end part of the extended conducting part 20 to the first protective layer 11 or the second protective layer 12 is not particularly limited. In this regard, it is preferable to fix with an adhesive from the viewpoint of ease of fixing. The form of the adhesive is, for example, liquid, paste, sheet, solid, or powder. The type of the adhesive is, for example, an aqueous adhesive, a chemical reaction adhesive, a solvent adhesive, or a hot melt adhesive. Examples of a material of the adhesive include at least one selected from the group consisting of a silicone-based resin, an acrylic-based resin, an epoxy-based resin, a urethane-based resin, and the like.

Furthermore, during charging and discharging of the solid state battery 200, as ions move in the solid electrolyte layer between the positive electrode layer and the negative electrode layer, the active material contained in each electrode layer may expand and contract along the lamination direction. In particular, when the active material, that is, the electrode layer expands along the lamination direction, tensile stress acting in an upward direction and tensile stress acting in a downward direction are generated due to this. In this regard, according to the present aspect, when the solid state battery 200 is surface-mounted on the electronic substrate 300, a minute space can be provided between the solid state battery 200 and the electronic substrate 300. The presence of such a space also makes it possible to receive an expanding part of the solid state battery 200 due to expansion of the electrode layer along the lamination direction (see FIG. 5).

In one aspect, the overlapping region 50 is preferably provided along a side surface of the battery element 100. Preferably, it is provided along the whole side surface of the battery element 100 (see FIGS. 2 to 5 and the like). The term "side surface" as used in the present specification means a surface extending in a direction relatively perpendicular to an upper surface or a lower surface among surfaces constituting the battery element 100. As can be seen from the above description, there are a plurality of the "side surfaces" depending on the form of the battery element 100. Therefore, the term "overlapping region is provided along the side surface of the battery element 100." as used in the present invention means that the overlapping region is provided with respect to a surface of the battery other than the upper surface or the lower surface of the battery element 100.

With such a configuration, since the overlapping region 50 does not protrude from the battery element 100, a mounting area required for surface mounting is reduced. In particular, when the end part of the conducting part 20 (specifically, the tab lead 22) along the contour of the battery element 100 is provided on the upper surface side or the lower surface side of the solid state battery 200, for example, the lower surface side, a part other than the end part of the conducting part 20 (specifically, the tab lead 22) can be accommodated in the overlapping region 50 along the side surface of the battery element 100, and it is possible to suitably achieve both surface mounting of the solid state battery 200 on the electronic substrate 300 and suppression of entry of water vapor into the battery.

In one aspect, as illustrated in FIG. 6, a sealant 24 is preferably provided in the conducting part 20 located in the overlapping region 50 as necessary. FIG. 6 is a sectional view schematically illustrating the solid state battery according to an embodiment (with a sealant) of the present invention.

Due to the presence of the sealant 24, the conducting part 20 located in the overlapping region 50 and the two protective layers 11 and 12 constituting the overlapping region 50 can be suitably bonded. As a result, in the overlapping region 50, the conducting part 20 and the two protective layers 11 and 12 can be favorably adhered by surface in sectional view, and a minute gap between the conducting part 20 and each protective layer can be more favorably reduced. As a result, the water vapor can be more suitably suppressed from passing through the overlapping region 50.

A material of the sealant 24 is not particularly limited as long as the conducting part 20 located in the overlapping region 50 and the two protective layers 11 and 12 constituting the overlapping region 50 can be suitably bonded, and examples thereof include at least one selected from the group consisting of a polyethylene-based resin, a polypropylene-based resin, and a polyethylene terephthalate-based resin.

In one aspect, the first protective layer 11 and the second protective layer 12 include an aluminum foil 11b and an aluminum foil 12b as intermediate layers (see FIG. 3). When the battery element 100 is covered with the first protective layer 11, the aluminum foil 11b, which is an intermediate layer of the protective layer, is electrically connected to the end face electrode 21 on a positive electrode side and the end face electrode 21 on a negative electrode side, and an insulating material is preferably provided on the end face of the protective layer from the viewpoint of preventing occurrence of a short circuit through the aluminum foil 11b. The method of an insulation treatment for providing the insulating material is not particularly limited, and any method may be used as long as it contributes to preventing a short circuit of the battery element 100 via the protective layer.

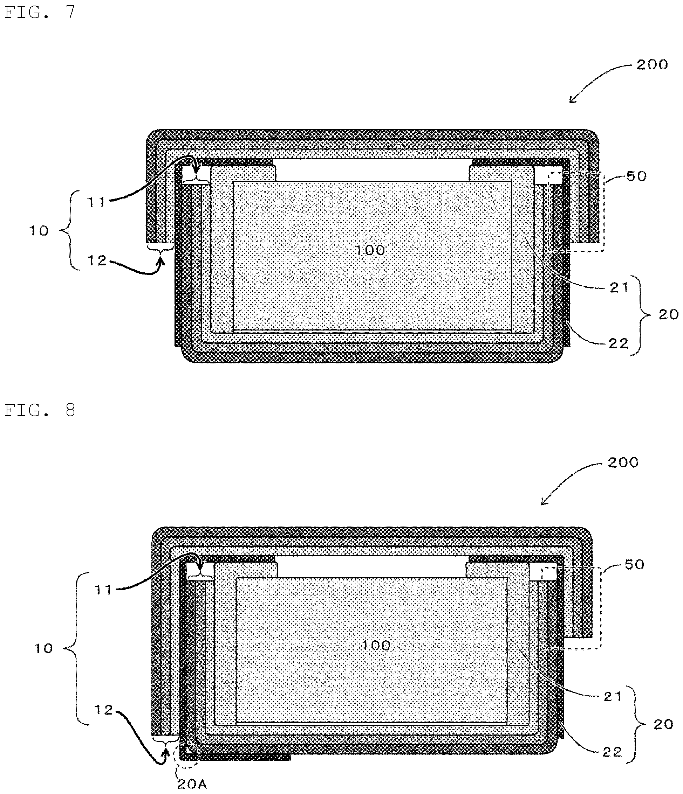

Note that the positional relationship between the conducting part 20 and the overlapping region 50 is not particularly limited until confirmation, and any structure may be used according to the form of surface mounting. For example, a structure as illustrated in FIGS. 7 and 8 can be adopted. As an example, in the structure of FIG. 7, the exposed parts of the conducting parts 20 on the positive electrode side and the negative electrode side are positioned so as to face each other with the battery element 100 interposed therebetween. As a result, the conducting part 20 on the positive electrode side and the conducting part 20 on the negative electrode side of the solid state battery 200 are positioned to be more distant from each other, so that the possibility that both electrodes are short-circuited can be reduced. Furthermore, as illustrated in FIG. 8, the design of the overlapping regions on the positive electrode side and the negative electrode side and the design of the tab lead 22 can be appropriately changed asymmetrically depending on a mounting destination of the solid state battery 200. This enables flexible surface mounting according to a surface form of the surface mounting destination of the solid state battery 200.

Furthermore, the thickness of the overlapping region 50 is determined by the thicknesses of the first protective layer 11 and the second protective layer 12 forming the overlapping region.

The thickness of the first protective layer 11 is preferably 1 um or more and 500 um or less, more preferably 2 um or more and 300 um or less, still more preferably 3 um or more and 100 um or less, for example, 50 um, from the viewpoint of suppressing deterioration of battery performance due to entry of water vapor into the battery element.

The thickness of the second protective layer 12 is preferably 1 um or more and 500 um or less, more preferably 2 um or more and 300 um or less, still more preferably 3 um or more and 100 um or less, for example, 50 um, from the viewpoint of suppressing deterioration of battery performance due to entry of water vapor into the battery element.

The overlapping region is preferably 2 um or more and 1000 um or less, more preferably 4 um or more and 600 um or less, still more preferably 6 um or more and 200 um or less, for example, 100 um from the viewpoint of further suppressing deterioration of battery performance due to entry of water vapor into the battery element.

### [Method of manufacturing solid state battery of present invention]

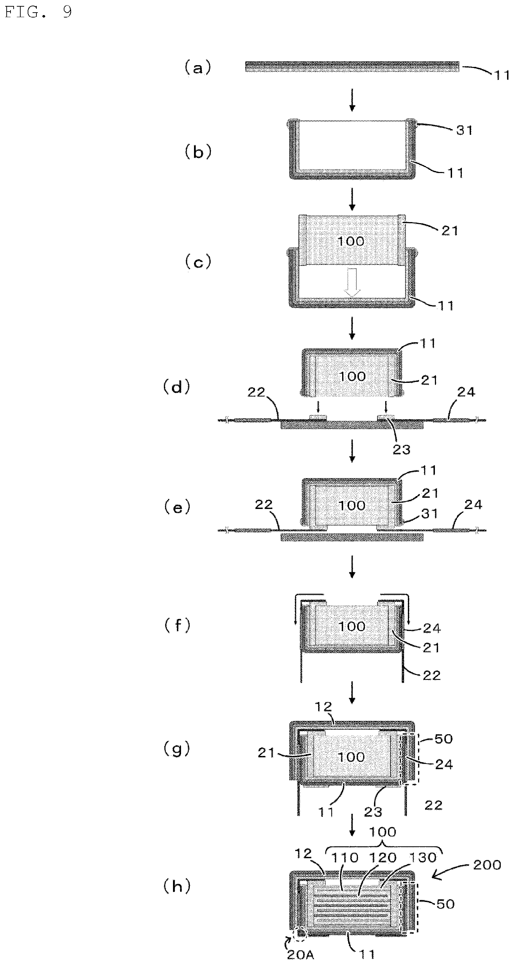

Hereinafter, a method of manufacturing a solid state battery according to an embodiment of the present invention will be described. The method of manufacturing a solid state battery according to an embodiment of the present invention roughly includes the following steps (i) to (iv) in order (see FIGS. 9(a) to 9(h).). Specifically, a method of manufacturing a solid state battery according to an embodiment of the present invention includes the steps of:
(i) preparing the battery element 100 including the positive electrode layer 110, the negative electrode layer 120, and the solid electrolyte layer 130 interposed between the positive electrode layer 110 and the negative electrode layer 120;
(ii) providing the first protective layer 11 to cover a part of the battery element 100;
(iii) providing the conducting part 20 capable of extracting electricity from the battery element 100 to the outside; and
(iv) providing the second protective layer 12 to cover a remaining part other than the part of the battery element 100.

In particular, the method of manufacturing a solid state battery according to an embodiment of the present invention is characterized in that the overlapping region 50 in which the first protective layer 11 and the second protective layer 12 overlap each other is formed, and the second protective layer 12 is provided so that the conducting part 20 is extended from the overlapping region 50 to the outside.

Hereinafter, steps of obtaining the solid state battery according to an embodiment of the present invention will be specifically described.

Hereinafter, for better understanding of the present invention, one manufacturing method will be exemplified and described, but the present invention is not limited to this method. Furthermore, temporal matters such as the following description order are merely for convenience of description, and are not necessarily limited thereto.

### [Preparation of first protective layer]

First, as illustrated in FIG. 9(a), the first protective layer 11 is prepared.

### [Deep drawing processing of laminate film]

Next, as illustrated in FIG. 9(b), a laminate film as the first protective layer 11 is subjected to drawing processing to be molded into a shape covering the battery element 100. The drawing processing is not particularly limited as long as it is a processing method in which the laminate film is processed into a concave shape by applying pressure to the laminate film and narrowing the laminate film to form a shape in which the laminate film covers the battery element 100. For example, a laminate film is placed on a box-shaped mold along the shape of the battery element 100, and pressure is applied from above the laminate film by a mold imitating the shape of the battery element 100, thereby molding the first protective layer 11 covering the battery element 100. The present invention is not limited thereto, and the battery element 100 may be pressed against the laminate film to perform drawing processing.

### [Attachment of first protective layer 11]

Next, as illustrated in FIG. 9(c), the battery element 100 is inserted into the first protective layer 11 obtained by the above method, and the first protective layer 11 is attached so as to cover the battery element 100. Specifically, the first protective layer is covered such that a part of the upper surface or a part of the lower surface of the battery element 100 is exposed. In a preferred aspect, the first protective layer is attached so as to cover a surface other than the upper surface or the lower surface of the battery element 100. More specifically, the first protective layer 11 is attached such that the end face of the first protective layer is located at a boundary between the upper surface and the side surface of the battery element 100. Note that it is preferable to previously attach the end face electrode 21 to the side surface of the battery element 100.

The end face of the first protective layer 11 may be provided with an insulating material 31 to prevent a short circuit of the battery element 100. The insulating material 31 is not particularly limited as long as it has electrical insulation, and may be, for example, an insulating resin. Examples of a material of the insulating resin include at least one selected from the group consisting of an epoxy-based resin, an acrylic-based resin, a phenol-based resin, and a synthetic rubber.

### [Attachment of tab lead 22]

Next, as illustrated in FIGS. 9(d) and 9(e), the tab lead 22 is attached to the end face electrode 21 provided on the battery element 100 that is not covered with the first protective layer 11. Preferably, a conductive adhesive 23 is applied to the end part of the tab lead 22 by metal mask printing, so that the end part of the tab lead 22 and the end face electrode 21 of the battery element 100 are attached to electrically connect to each other. The conductive adhesive 23 may be a conductive paste, and is made of, for example, a resin material containing a conductive filler. Examples of the conductive filler include at least one selected from the group consisting of nickel, copper, aluminum, gold, carbon, and the like, and examples of the resin material include at least one selected from the group consisting of an epoxy-based resin, an acrylic-based resin, a silicone-based resin, a urethane-based resin, and the like.

Next, as illustrated in FIG. 9(f), the tab lead 22 is positioned along the contour surface of the side surface of the battery element 100 with the end part of the tab lead 22 connected to the end face electrode 21 of the battery element 100 as a base point. When the tab lead 22 is disposed along the side of the battery element 100, the tab lead 22 may be bent.

### [Attachment of second protective layer 12]

Next, as illustrated in FIG. 9(g), after the tab lead 22 is positioned so as to follow the contour surface of the side surface of the battery element 100, the second protective layer 12 is attached in a direction opposite to the direction in which the first protective layer 11 is attached. In other words, a surface of the second protective layer 12 is disposed with respect to the surface of the battery element 100 that is not covered with the first protective layer 11. Thereafter, the end part of the second protective layer 12 is disposed along the side surface of the battery element 100. At this time, since the end part of the first protective layer 11 is already disposed on the side surface of the battery element 100, the overlapping region 50 in which the second protective layer 12 and the first protective layer 11 overlap is formed. Specifically, a layer in which the battery element 100, the first protective layer 11, the tab lead 22, and the second protective layer 12 are arranged in this order is formed from the battery element 100 toward the outside, and the tab lead 22 is extended from the overlapping region 50. In other words, the conducting part 20 including the end face electrode 21 and the tab lead 22 is extended from the overlapping region to the outside.

From the viewpoint of preventing water vapor from entering the battery element 100, it is preferable to bring the first protective layer 11 located in the overlapping region 50, the tab lead 22 as a constitution element of the conducting part 20, and the second protective layer 12 into a close contact state. The method of bringing into close contact is not particularly limited, but can be brought into close contact by mechanical bonding, pressure bonding, welding, an adhesive, or the like. In a preferred aspect, from the viewpoint of more improving the close contact state between the first protective layer 11, the tab lead 22, and the second protective layer 12, it is preferable that the sealant 24 is applied to the tab lead 22 in advance, and the sealant 24 is provided to the overlapping region 50. For example, the sealant 24 may be made of at least one resin material selected from the group consisting of a polyethylene-based resin, a polypropylene-based resin, an ethylene-vinyl acetate copolymer-based resin, a polyamide-based resin, an acryl-based resin, and the like.

### [Fixing of tab lead 22]

Finally, as illustrated in FIG. 9(h), the tab lead 22 whose one end is a free end, that is, the end part (that is, the end part of the extended conducting part 20) of the tab lead 22 which is not connected to the battery element 100 is positioned along the contour surface of the battery element 100. Specifically, the tab lead 22 is bent so as to be in contact with the first protective layer 11. At this time, an adhesive or the like can be applied to a part where the tab lead 22 and the first protective layer 11 are in contact with each other to bond and fix the tab lead 22 and the first protective layer 11 to each other. As the adhesive, an adhesive as exemplified in [0062] can be used.

The solid state battery 200 according to an embodiment of the present invention can be finally obtained through such a step (FIG. 9(h)). Note that the bending of the tab lead 22 and the adhesion fixation to the first protective layer in the [Fixing of tab lead 22] may be performed, for example, immediately before the solid state battery 200 of the present invention is surface-mounted on the electronic substrate 300. Specifically, after manufacturing until the state of FIG. 9(g) is obtained, the manufacturing may be temporarily stopped before the adhesive is applied, and the state of FIG. 9(g) may be temporarily stored. Design items such as presence or absence of bending of the tab lead 22, a length of a part from which the tab lead 22 is extended, a bonding and fixing position of the tab lead 22, a bending part, and a bending direction may be appropriately determined according to a shape and the like of the electronic substrate to be surface-mounted thereafter. By adopting such a step, the solid state battery 200 of the present invention can be flexibly surface-mounted according to the shape of the electronic substrate.

In the finally obtained solid state battery 200 according to an embodiment of the present invention, the following operational effects can be exhibited.

Specifically, in the obtained solid state battery 200 according to an embodiment of the present invention, the conducting part 20 connected to the battery element 100 is extended from the overlapping region 50 to the outside. Therefore, as compared with the conventional solid state battery 200' covered with the single protective layer 13' (That is, there is no overlapping region.), in the extending direction (longitudinal direction) of the overlapping region 50 in sectional view, a path length from the outside of the battery to the battery element 100 can be increased by a length of the overlapping region 50. As a result, water vapor 40 can be favorably suppressed from reaching the battery element 100 from the outside as compared with the conventional solid state battery 200'.

Furthermore, as can be seen from the above description, in the overlapping region 50, one protective layer and the other protective layer overlap each other. That is, the overlapping region 50 is a region including two or more protective layers. Therefore, a thickness of the overlapping region 50 is thicker than a thickness of the composite protective layer 10 in other parts other than the overlapping region 50. This makes it possible to increase the thickness of the protective layer in the overlapping region 50 as compared with the conventional solid state battery 200' covered with the single protective layer 13' (That is, there is no overlapping region.) in a thickness direction (transverse direction) of the overlapping region 50 in sectional view. Therefore, as compared with the conventional solid state battery 200', it is possible to favorably suppress the water vapor 40 from reaching the battery element 100 from the outside.

Although one embodiment of the present invention has been described above, only typical examples of the application range of the present invention have been illustrated. Therefore, a person skilled in the art may easily understand that the present invention is not limited thereto, and various modifications may be made.

### INDUSTRIAL APPLICABILITY

The solid state battery according to an embodiment of the present invention can be used in various fields where battery use or power storage is assumed. Although it is merely an example, the solid state battery according to an embodiment of the present invention can be used in the fields of electricity, information and communication (mobile device fields such as, for example, mobile phones, smart phones, smartwatches, notebook computers and digital cameras, activity meters, arm computers, and electronic paper) in which mobile devices and the like are used, home and small industrial applications (for example, the fields of electric tools, golf carts, and home, nursing, and industrial robots), large industrial applications (for example, fields of forklift, elevator, and harbor crane), transportation system fields (for example, the field of hybrid vehicles, electric vehicles, buses, trains, powerassisted bicycles, electric two-wheeled vehicles, and the like), power system applications (for example, fields such as various types of power generation, road conditioners, smart grids, and household power storage systems), medical applications (medical equipment fields such as earphone hearing aids), pharmaceutical applications (fields such as dosage management systems), IoT fields, space and deep sea applications (for example, fields such as a space probe and a submersible), and the like.

### DESCRIPTION OF REFERENCE SYMBOLS

- 300:: Electronic substrate
- 310:: Electronic substrate connection part
- 200:: Solid state battery
- 100:: Battery element
- 110:: Positive electrode layer
- 120:: Negative electrode layer
- 130:: Solid electrolyte layer
- 10:: Composite protective layer
- 11:: First protective layer
- 11a:: Protective film
- 11b:: Aluminum foil
- 11c:: Sealing film
- 12:: Second protective layer
- 12a:: Protective film
- 12b:: Aluminum foil
- 12c:: Sealing film
- 13':: Protective layer
- 20:: Conducting part
- 20A:: Bent part
- 21:: End face electrode
- 22, 22':: Tab lead
- 23:: Conductive adhesive
- 24:: Sealant
- 31:: Insulating material
- 40:: Water vapor
- 50:: Overlapping region

## Claims

1. A solid state battery comprising:
a battery element including a positive electrode layer, a negative electrode layer, and a solid electrolyte layer interposed between the positive electrode layer and the negative electrode layer;
a composite protective layer covering the battery element; and
a conducting part capable of extracting electricity from the battery element to an outside,
wherein the composite protective layer includes a first protective layer and a second protective layer formed with an overlapping region where the first protective layer and the second protective layer overlap each other, and
the conducting part is extended from the overlapping region to the outside.

2. The solid state battery according to claim 1, wherein the conducting part is provided so as to be sandwiched between the first protective layer and the second protective layer in the overlapping region.

3. The solid state battery according to claim 1 or 2, wherein the conducting part and the composite protective layer are provided along a contour surface of the battery element.

4. The solid state battery according to claim 3, wherein the conducting part and the composite protective layer extend in a direction substantially identical with an extending direction of the contour surface of the battery element.

5. The solid state battery according to any one of claims 1 to 4, wherein an extended part of the conducting part to the outside includes a bent part.

6. The solid state battery according to any one of claims 1 to 5, wherein the conducting part is in contact with each of the first protective layer and the second protective layer in the overlapping region.

7. The solid state battery according to any one of claims 1 to 6, wherein the overlapping region is provided along a side surface of the battery element.

8. The solid state battery according to claim 7, wherein the overlapping region is provided along a whole side surface of the battery element.

9. The solid state battery according to any one of claims 1 to 8, wherein a thickness of the composite protective layer in the overlapping region is thicker than a thickness of the composite protective layer in a part other than the overlapping region.

10. The solid state battery according to any one of claims 1 to 9, wherein a sealant is disposed in the conducting part located in the overlapping region.

11. The solid state battery according to any one of claims 1 to 10, wherein the first protective layer and the second protective layer face each other in the overlapping region.

12. The solid state battery according to any one of claim 1 to 11, wherein at least an extended end part of the conducting part is provided on at least one of an upper surface side and a lower surface side of the battery element covered with the first protective layer or the second protective layer.

13. The solid state battery according to any one of claims 1 to 12, wherein at least an extended end part of the conducting part is bonded to the first protective layer or the second protective layer with an adhesive.

14. The solid state battery according to any one of claims 1 to 13, wherein the first protective layer is provided to directly cover the battery element, and an insulating material is provided on an end face of the first protective layer, so that the first protective layer and the battery element can be electrically insulated.

15. A method of manufacturing a solid state battery, the method comprising:
preparing a battery element including a positive electrode layer, a negative electrode layer, and a solid electrolyte layer interposed between the positive electrode layer and the negative electrode layer;
providing a first protective layer to cover a part of the battery element;
providing a conducting part capable of extracting electricity from the battery element to an outside; and
providing a second protective layer to cover a remaining part other than the part of the battery element,
wherein the second protective layer is provided so that an overlapping region is formed in which the first protective layer and the second protective layer overlap each other, and the conducting part is extended from the overlapping region to the outside.

16. The method of manufacturing a solid state battery according to claim 15, wherein the conducting part is provided so as to be sandwiched between the first protective layer and the second protective layer in the overlapping region.

17. The method of manufacturing a solid state battery according to claim 15 or 16, wherein
along a contour surface of the battery element covered with the first protective layer,
the conducting part and a composite protective layer including the first protective layer and the second protective layer are provided.

18. The method of manufacturing a solid state battery according to claim 17, wherein the conducting part and the composite protective layer extend in a direction substantially identical with an extending direction of the contour surface of the battery element.

19. The method of manufacturing a solid state battery according to claim 17 or 18, wherein an extended part of the conducting part to the outside is bent along the contour surface of the battery element covered with the first protective layer.
